# EUROPEAN PATENT APPLICATION

(11) **EP 4 757 099 A1**
(43) Date of publication of application: **10.06.2026**
(21) Application number: 25221127.1
(22) Date of filing: 05.12.2025
(51) Int. Cl.: H02J 3/32, H02J 3/38, H02J 3/46, H02M 7/493

(54) **CONTROL METHOD FOR HYBRID INVERTER PARALLEL SYSTEM AND RELATED APPARATUS THEREOF**

(30) Priority: 06.12.2024 CN 202411791159
(71) Applicant: Solax Power Network Technology (Zhejiang) Co., Ltd., Hangzhou, Zhejiang 311500 (CN)
(72) Inventor: HU, Haozhen, Hangzhou, 311500 (CN); YUAN, Yonggang, Hangzhou, 311500 (CN); LI, Zhiyu, Hangzhou, 311500 (CN); YAO, Yousu, Hangzhou, 311500 (CN)
(74) Representative: Murgitroyd & Company

(57) **Abstract**

A control method for a hybrid inverter parallel system includes: acquiring, by an energy management system, a target operating mode of the hybrid inverter parallel system; acquiring, by the energy management system, load power demand, grid meter power, and operation data of devices based on the target operating mode, and generating, by the energy management system, output power setpoints of corresponding inverters based on the target operating mode, load power demand, grid meter power, and operation data; and sending, by the energy management system, the output power setpoints to the corresponding inverters, so that the grid-tied inverter and the energy storage inverter adjust respective actual output power values based on the output power setpoints of the grid-tied inverter and the energy storage inverter, respectively. The control method enables system-level operating mode control of the hybrid inverter parallel system and improves a control effect of output power of an inverter.

## Description

### TECHNICAL FIELD

The present application relates to the field of inverter control technologies, and in particular, to a control method for a hybrid inverter parallel system and related apparatus thereof.

### BACKGROUND

With advancement of photovoltaic inverter technologies and reduction of costs, residential photovoltaic energy storage systems have gradually become one of the important ways to promote green transformation of an energy structure. However, with iteration of technologies and increase in power consumption, an original inverter and an original energy storage battery are no longer able to meet current needs, and users usually adopt multiple units in parallel to expand capacity and power.

As for a multi-unit parallel mode, when multiple units are connected in parallel, system-level operating mode control (such as different energy output priorities, limit on grid-connected power, etc.) cannot be achieved due to lack of communication between inverters. A control effect of output power of the inverter is poor, which affects implementation of a multi-unit parallel system. Furthermore, when an energy storage inverter and a grid-tied inverter are operated in a multi-unit hybrid parallel configuration, how to achieve operating mode control of an entire system to achieve a preset operation effect, enhance user experience, increase users' enthusiasm to purchase additional photovoltaic systems, and promote development of the photovoltaic industry is a problem that needs to be solved urgently.

### SUMMARY

A control method of a hybrid inverter parallel system and related apparatus thereof provided in embodiments of the present invention at least solve a problem in that a hybrid inverter parallel system in related technologies is difficult to achieve system-level operating mode control, and a control effect of output power of inverters is poor, which affects user experience and limits promotion and application of the hybrid inverter parallel system.

In order to solve the above problem, one aspect of an embodiment of the present invention provides a control method for a hybrid inverter parallel system, including:
acquiring, by an energy management system, a target operating mode of the hybrid inverter parallel system, where the hybrid inverter parallel system includes at least one grid-tied inverter and at least one energy storage inverter, each grid-tied inverter in the at least one grid-tied inverter and each energy storage inverter in the at least one energy storage inverter are configured to be connected to a photovoltaic module, and the grid-tied inverter and the energy storage inverter are operably connected in parallel to an alternating current bus;
acquiring, by the energy management system, load power demand, grid meter power, and operation data of devices in the hybrid inverter parallel system based on the target operating mode, and generating, by the energy management system, an output power setpoint of the grid-tied inverter and an output power setpoint of the energy storage inverter based on the target operating mode, the load power demand, the grid meter power, and the operation data of the devices in the hybrid inverter parallel system; and
sending, by the energy management system, the output power setpoint of the grid-tied inverter to the grid-tied inverter, and sending, by the energy management system, the output power setpoint of the energy storage inverter to the energy storage inverter, so that the grid-tied inverter and the energy storage inverter adjust respective actual output power values based on the output power setpoint of the grid-tied inverter and the output power setpoint of the energy storage inverter, respectively.

In some embodiments, before the sending, by the energy management system, the output power setpoint of the grid-tied inverter to the grid-tied inverter, the control method further includes:
acquiring, by the energy management system, a grid power threshold and determining, by the energy management system, whether the output power setpoint of the grid-tied inverter is greater than the grid power threshold; and
if the output power setpoint of the grid-tied inverter is greater than the grid power threshold, updating, by the energy management system, the output power setpoint of the grid-tied inverter to the grid power threshold.

In some embodiments, the target operating mode includes any one of a self-consumption mode and a grid priority mode; when the target operating mode is the self-consumption mode, an energy output priority of the hybrid inverter parallel system is a load, an energy storage battery, and a grid in a prioritized sequence; and when the target operating mode is the grid priority mode, the energy output priority of the hybrid inverter parallel system is the load, the grid, and the energy storage battery in a prioritized sequence.

In some embodiments, the acquiring, by the energy management system, the load power demand, the grid meter power, and the operation data of the devices in the hybrid inverter parallel system based on the target operating mode includes:
acquiring, by the energy management system, the load power demand, the grid meter power, and the operation data of the devices in the hybrid inverter parallel system at a current moment based on the energy output priority indicated by the self-consumption mode or the grid priority mode, where the operation data of the devices in the hybrid inverter parallel system acquired at the current moment includes: output power of the energy storage inverter, output power of the grid-tied inverter, output power of the photovoltaic module, maximum output power of the photovoltaic module, state of charge of the energy storage battery, charging/discharging power of the energy storage battery and maximum charging/discharging power of the energy storage battery,
where the generating, by the energy management system, the output power setpoint of the grid-tied inverter and the output power setpoint of the energy storage inverter based on the target operating mode, the load power demand, the grid meter power, and the operation data of the devices in the hybrid inverter parallel system includes:
generating, by the energy management system, the output power setpoint of the grid-tied inverter and the output power setpoint of the energy storage inverter based on the energy output priority indicated by the self-consumption mode or the grid priority mode, and the load power demand, the grid meter power and the operation data of the devices in the hybrid inverter parallel system acquired at the current moment.

In some embodiments, the control method further includes:
acquiring, by the energy management system, a grid power threshold at the current moment;
generating, by the energy management system, an output power intermediate setpoint corresponding to the grid-tied inverter and an output power intermediate setpoint corresponding to the energy storage inverter based on the energy output priority indicated by the self-consumption mode or the grid priority mode as well as the load power demand, the grid meter power, the grid power threshold, and the operation data of devices in the hybrid inverter parallel system acquired at the current moment; and
sending, by the energy management system, the output power intermediate setpoint corresponding to the grid-tied inverter to the grid-tied inverter, and sending, by the energy management system, the output power intermediate setpoint corresponding to the energy storage inverter to the energy storage inverter, so that the grid-tied inverter and the energy storage inverter adjust the respective actual output power values based on the output power intermediate setpoint corresponding to the grid-tied inverter and the output power intermediate setpoint corresponding to the energy storage inverter, respectively.

In some embodiments, the control method further includes:
reacquiring, by the energy management system, load power demand, grid meter power, grid power threshold and operation data of devices in the hybrid inverter parallel system at a next set moment based on the energy output priority indicated by the self-consumption mode or the grid priority mode, and generating an output power setpoint corresponding to the energy storage inverter and an output power setpoint corresponding to the grid-tied inverter based on the energy output priority indicated by the self-consumption mode or the grid priority mode as well as the load power demand, the grid meter power, the grid power threshold and the operation data of the devices in the hybrid inverter parallel system acquired at the next set moment.

In some embodiments, the target operating mode includes an energy storage priority mode; and when the target operating mode is the energy storage priority mode, an energy output priority of the hybrid inverter parallel system is a load and a grid in a prioritized sequence, and under the energy storage priority mode, an energy storage battery corresponding to the energy storage inverter does not perform a discharge operation;
where the acquiring, by the energy management system, the load power demand, the grid meter power, and the operation data of the devices in the hybrid inverter parallel system based on the target operating mode includes:
acquiring, by the energy management system, the load power demand, the grid meter power, and the operation data of the devices in the hybrid inverter parallel system at a current moment based on the energy output priority indicated by the energy storage priority mode, where the operation data of the devices in the hybrid inverter parallel system acquired at the current moment includes output power of the energy storage inverter, output power of the grid-tied inverter, output power of the photovoltaic module, maximum output power of the photovoltaic module, state of charge of the energy storage battery, and charging power of the energy storage battery, and maximum charging power of the energy storage battery.

In some embodiments, in the case where the at least one grid-tied inverter includes multiple grid-tied inverters, and the at least one energy storage inverter includes multiple energy storage inverters, the hybrid inverter parallel system includes an energy storage inverter system including the multiple energy storage inverters and a grid-tied inverter system including the multiple grid-tied inverters, and the control method further includes:
sending, by the energy management system, the output power setpoint of the grid-tied inverter to the grid-tied inverter system, and sending, by the energy management system, the output power setpoint of the energy storage inverter to the energy storage inverter system, so that the grid-tied inverter system adjusts an actual output power value of the grid-tied inverter based on the output power setpoint of the grid-tied inverter, and the energy storage inverter system adjusts an actual output power value of the energy storage inverter based on the output power setpoint of the energy storage inverter.

In order to solve the above problem, one aspect of an embodiment of the present invention provides a control method for a hybrid inverter parallel system, including:
receiving, by each energy storage inverter in at least one energy storage inverter in the hybrid inverter parallel system, an output power setpoint of the energy storage inverter sent by an energy management system, and adjusting, by the energy storage inverter, an actual output power value of the energy storage inverter based on the output power setpoint of the energy storage inverter; and
receiving, by each grid-tied inverter in at least one grid-tied inverter in the hybrid inverter parallel system, an output power setpoint of the grid-tied inverter sent by the energy management system, and adjusting, by the grid-tied inverter, an actual output power value of the grid-tied inverter based on the output power setpoint of the grid-tied inverter.

In some embodiments, the receiving, by each energy storage inverter in the at least one energy storage inverter in the hybrid inverter parallel system, the output power setpoint of the energy storage inverter sent by an energy management system, and adjusting, by the energy storage inverter, the actual output power value of the energy storage inverter based on the output power setpoint of the energy storage inverter includes:
if the output power setpoint of the energy storage inverter is less than the actual output power value of the energy storage inverter, controlling, by the energy storage inverter, a photovoltaic module corresponding to the energy storage inverter to reduce output power of the photovoltaic module corresponding to the energy storage inverter, to adjust the actual output power value of the energy storage inverter to the output power setpoint of the energy storage inverter;
if the output power setpoint of the energy storage inverter is greater than the actual output power of the energy storage inverter, controlling, by the energy storage inverter, a photovoltaic module corresponding to the energy storage inverter to increase output power of the photovoltaic module corresponding to the energy storage inverter and/or controlling, by the energy storage inverter, discharge of an energy storage battery, to adjust the actual output power value of the energy storage inverter to a value where a deviation from the output power setpoint of the energy storage inverter is within a preset tolerance range.

**In** some embodiments, receiving, by each grid-tied inverter in the at least one grid-tied inverter in the hybrid inverter parallel system, the output power setpoint of the grid-tied inverter sent by the energy management system, and adjusting, by the grid-tied inverter, the actual output power value of the grid-tied inverter based on the output power setpoint of the grid-tied inverter includes:
if the output power setpoint of the grid-tied inverter is less than the actual output power value of the grid-tied inverter, controlling, by the grid-tied inverter, a photovoltaic module corresponding to the grid-tied inverter to reduce output power of the photovoltaic module corresponding to the grid-tied inverter, to adjust the actual output power value of the grid-tied inverter to the output power setpoint of the grid-tied inverter;
if the output power setpoint of the grid-tied inverter is greater than the actual output power of the grid-tied inverter, controlling, by the grid-tied inverter, a photovoltaic module corresponding to the grid-tied inverter to increase output power of the photovoltaic module corresponding to the grid-tied inverter and/or controlling, by the grid-tied inverter, to reduce grid-connected power, to adjust the actual output power value of the grid-tied inverter to a value where a deviation from the output power setpoint of the grid-tied inverter is within a preset tolerance range.

In some embodiments, when a target operating mode of the hybrid inverter parallel system includes any one of a self-consumption mode and a grid priority mode, the control method further includes:
receiving, by the energy storage inverter, an output power intermediate setpoint corresponding to the energy storage inverter sent by the energy management system, and adjusting, by the energy storage inverter, an actual output power value of the energy storage inverter based on the output power intermediate setpoint corresponding to the energy storage inverter; and
receiving, by the grid-tied inverter, an output power intermediate setpoint corresponding to the grid-tied inverter sent by the energy management system, and adjusting, by the grid-tied inverter, an actual output power value of the grid-tied inverter based on the output power intermediate setpoint corresponding to the grid-tied inverter.

In some embodiments, in the case where the at least one grid-tied inverter includes multiple grid-tied inverters, and the at least one energy storage inverter includes multiple energy storage inverters, the hybrid inverter parallel system includes an energy storage inverter system including the multiple energy storage inverters and a grid-tied inverter system including the multiple grid-tied inverters, and the control method further includes:
receiving, by the grid-tied inverter system, the output power setpoint of the grid-tied inverter sent by the energy management system and adjusting, by the grid-tied inverter system, the actual output power value of the grid-tied inverter based on the output power setpoint of the grid-tied inverter; and
receiving, by the energy storage inverter system, the output power setpoint of the energy storage inverter sent by the energy management system and adjusting, by the energy storage inverter system, the actual output power value of the energy storage inverter based on the output power setpoint of the energy storage inverter.

In order to solve the above problem, one aspect of an embodiment of the present invention provides a photovoltaic inverter system, including: an energy management system and a hybrid inverter parallel system,
the hybrid inverter parallel system includes at least one grid-tied inverter and at least one energy storage inverter, each grid-tied inverter in the at least one grid-tied inverter and each energy storage inverter in the at least one energy storage inverter are configured to be connected to a photovoltaic module, and the grid-tied inverter and the energy storage inverter are operably connected in parallel to an alternating current bus; and
the energy management system communicates with the hybrid inverter parallel system, and is configured to perform the steps of the control method of any one of the above embodiments.

In some embodiments, the energy storage inverter and the grid-tied inverter are configured to perform the steps of the control method of any one of the above embodiments.

Beneficial effects of the embodiments of the present invention: the energy management system acquires a target operating mode of a hybrid inverter parallel system, where the hybrid inverter parallel system includes at least one grid-tied inverter and at least one energy storage inverter; the grid-tied inverter and the energy storage inverter are configured to be connected to a photovoltaic module, the grid-tied inverter and the energy storage inverter are operably connected in parallel to an AC bus; the energy management system acquires load power demand, grid meter power, and operation data of devices in the hybrid inverter parallel system based on the target operating mode, and generates an output power setpoint of the grid-tied inverter and an output power setpoint of the energy storage inverter based on the target operating mode, the load power demand, the operation data of the devices; and the energy management system sends the output power setpoint of grid-tied inverter to the grid-tied inverter and sends the output power setpoint of the energy storage inverter to the energy storage inverter, so that the grid-connected inverter and the energy storage inverter adjust their respective actual output power values based on the output power setpoint of the grid-connected inverter and the output power setpoint of the energy storage inverter, respectively. This overcomes the problem that in related technologies, it is difficult for the hybrid inverter parallel system that includes energy storage inverters and grid-connected inverters to achieve system-level operating mode control, and a control effect of output power of the inverter is poor, and user experience is poor, which limits enthusiasm of users to purchase additional photovoltaic systems and limits development of the photovoltaic industry. By adding the energy management system to communicate with the devices in the hybrid inverter parallel system, the output power of the energy storage inverter and the grid-tied inverter can be set and controlled by the energy management system, an operation effect corresponding to the system-level operating mode is achieved, the user experience is enhanced, and technical effects of promotion and application of the hybrid inverter parallel system are expanded.

Details of one or more embodiments of the present invention are presented in the following accompany drawings and descriptions to make other features, purposes and advantages of the present invention simpler and easier to understand.

### BRIEF DESCRIPTION OF THE DRAWINGS

In order to more clearly explain technical solutions in embodiments of the present invention or the existing technologies, the attached drawings required to be used in the embodiments or description of the existing technologies will be briefly introduced below. Obviously, the attached drawings described below are only some embodiments of the present invention. For those skilled in the art, other embodiments can also be obtained based on these attached drawings without inventive effort.
Figure 1 is a flowchart diagram of a control method for a hybrid inverter parallel system according to an embodiment of the present invention.
Figure 2 is a schematic diagram of connection among an energy management system and devices in hybrid inverter parallel system, loads, and a grid according to another embodiment of the present invention.
Figure 3 is a schematic diagram of power control curves of devices in a scenario in which grid-connected power is not restricted under a self-consumption mode according to an embodiment of the present invention.
Figure 4 is a schematic diagram of power control curves of devices in a first grid power threshold scenario under a self-consumption mode according to an embodiment of the present invention.
Figure 5 is a schematic diagram of power control curves of devices in a second grid power threshold scenario under a self-consumption mode according to an embodiment of the present invention.
Figure 6 is a schematic frame diagram of a control device for a hybrid inverter parallel system according to an embodiment of the present invention.
Figure 7 is a schematic structural diagram of an electronic device of the present invention.

### DETAILED DESCRIPTION OF THE EMBODIMENTS

Embodiments of the present invention will be described in more detail below with reference to the attached drawings. Although some embodiments of the present invention are shown in the attached drawings, it should be understood that the present invention can be implemented in various forms and should not be interpreted as being limited to the embodiments described here; on the contrary, these embodiments are provided for a more thorough and complete understanding of the present invention. It should be understood that the attached diagrams and embodiments of the present invention are for illustrative purposes only and are not used to limit the scope of protection of the present invention.

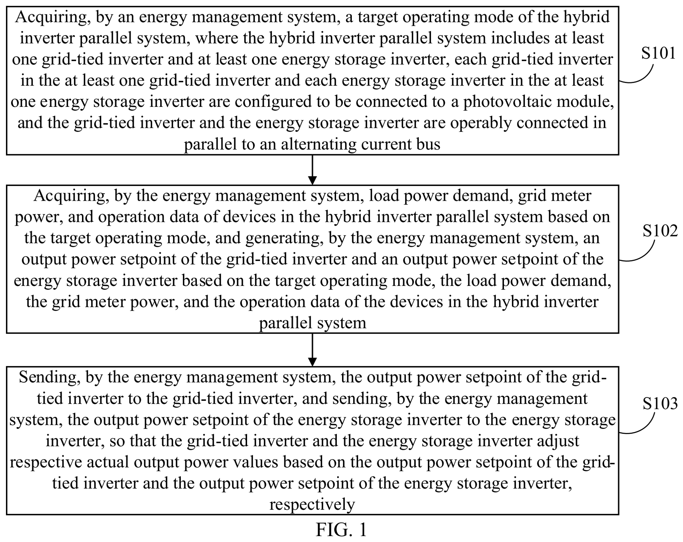

To solve the above problem, the embodiments of the present invention provide a control method for a hybrid inverter parallel system. As shown in Figure 1, the control method for the hybrid inverter parallel system mainly includes the following content.

Step S101, acquiring, by an energy management system, a target operating mode of the hybrid inverter parallel system, where the hybrid inverter parallel system includes at least one grid-tied inverter and at least one energy storage inverter, each grid-tied inverter in the at least one grid-tied inverter and each energy storage inverter in the at least one energy storage inverter are configured to be connected to a photovoltaic module, and the grid-tied inverter and the energy storage inverter are operably connected in parallel to an alternating current bus.

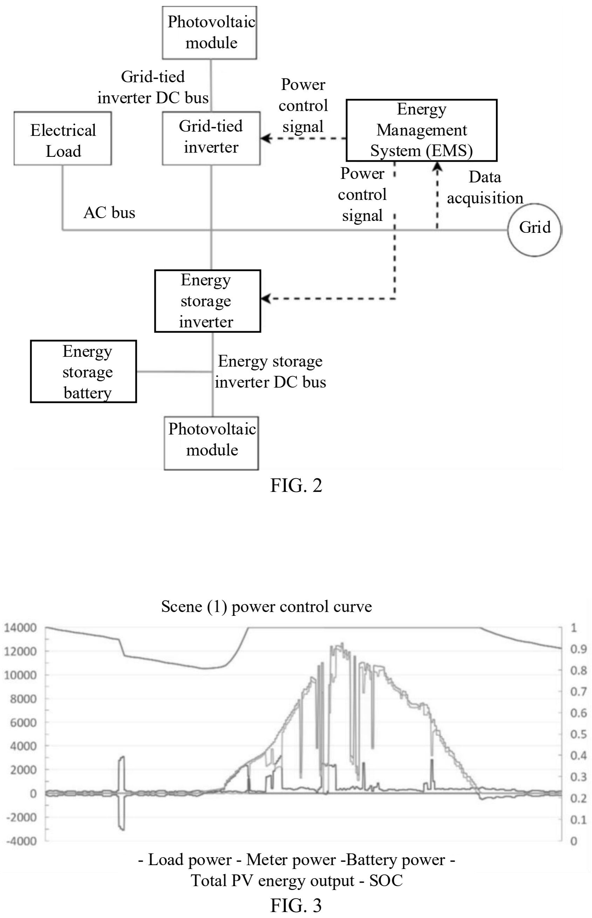

In the hybrid inverter parallel system provided in the embodiments of the present invention, the energy storage inverter and the grid-tied inverter are connected in a multi-unit hybrid parallel configuration. As shown in Figure 2, the energy storage inverter is connected to the photovoltaic module, the energy storage battery, and the AC bus. The photovoltaic module provides a DC input to the energy storage inverter, and the energy storage inverter converts DC to AC output to the AC bus. The energy storage inverter may also convert energy of the energy storage battery as an input to AC output to the AC bus; the photovoltaic module may also directly charge the energy storage battery through an energy storage inverter DC bus; and the energy storage inverter may also charge the energy storage battery by receiving energy from the AC bus. The grid-tied inverter is connected to the photovoltaic module and the AC bus. The photovoltaic module provides a DC input to the grid-tied inverter, and the grid-tied inverter converts DC to AC output to the AC bus; and it is defined that, grid-connected power of the AC bus is in a positive direction (that is, a power value indicated by a grid-connected meter is positive), and the power received from the grid is in a negative direction (that is, a power value indicated by the grid-connected meter is negative).

The operating mode of the hybrid inverter parallel system indicates an energy output priority of the hybrid inverter parallel system, that is, a priority that energy obtained by the hybrid inverter parallel system from the photovoltaic module via the energy storage inverter and the grid-tied inverter is supplied to the load, the energy storage battery and the grid. It may be understood that, according to the specific settings of the operating mode, when the load is the highest energy output priority, and if the energy provided by the photovoltaic module is insufficient, the hybrid inverter parallel system may also obtain energy from the energy storage battery or the grid to meet load demand.

The energy management system (EMS, Energy Management System) provided by the embodiments of the present invention may be set independently of the hybrid inverter parallel system or integrated within the hybrid inverter parallel system.

Through the above settings, using the energy management system as a central controller, the target operating mode of the hybrid inverter parallel system is first acquired to provide guidance for subsequent power distribution and required data, which helps to ensure that the hybrid inverter parallel system can operate based on a preset operating mode, thereby achieving a preset operation effect. By acquiring the target operating mode, the energy management system may also optimize an energy flow of the hybrid inverter parallel system and improve energy output efficiency of the hybrid inverter parallel system. For example, the use of photovoltaic energy is prioritized when light is sufficient, and power supply is switched to the energy storage battery or the grid when the light is insufficient, thereby maximizing the use of energy. In addition, users can also configure and monitor an operating status of the hybrid inverter parallel system by themselves through the energy management system to further meet users' load demand and enhance the user experience.

According to a specific implementation of an embodiment of the present invention, the control method further includes automatically selecting an optimal target operating mode based on a machine learning algorithm and according to historical data and a real-time environmental condition. For example, by analyzing local weather forecast data or users' historical load demand, data such as PV energy output or load demand are predicted, so that the target operating mode is dynamically adjusted to achieve intelligent energy management.

Step S102, acquiring, by the energy management system, load power demand, grid meter power, and operation data of devices in the hybrid inverter parallel system based on the target operating mode, and generating, by the energy management system, an output power setpoint of the grid-tied inverter and an output power setpoint of the energy storage inverter based on the target operating mode, the load power demand, the grid meter power, and the operation data of the devices in the hybrid inverter parallel system.

Through the above settings, the energy management system may dynamically adjust the output power of the grid-tied inverter and the output power of the energy storage inverter based on the target operating mode, the load demand, and the real-time operating power data of the devices in the hybrid inverter parallel system, making maximum use of photovoltaic energy while protecting the users' load demand, reducing dependence on the grid, improving energy utilization efficiency, and achieving accurate distribution and control of inverter output power. Accurate power distribution helps to balance the energy flow in the hybrid inverter parallel system, reduce voltage fluctuations and frequency deviations, and improve the stability and reliability of the hybrid inverter parallel system. Furthermore, by distributing power based on the load power demand, the hybrid inverter parallel system can better respond to users' load demand, provide a stable power supply, and enhance the user experience.

According to a specific implementation of an embodiment of the present invention, during peak load electricity consumption periods, electricity stored in the energy storage battery may also be released through the energy storage inverter to reduce the burden on the grid; and during periods of low load, excess electric energy may be fed into the grid through the grid-tied inverter to achieve the effect of peak shaving and valley filling, reducing electricity costs.

According to an embodiment of the present invention, the control method also includes: through fault detection and fault-tolerant control mechanisms, performing, by the energy management system, fault detection on the at least one energy storage inverter, the at least one grid-tied inverter, and the photovoltaic module; when one inverter in the at least one energy storage inverter and the at least one grid-tied inverter or the photovoltaic module fail, automatically adjusting, by the energy management system, output power of other inverters in the at least one energy storage inverter and the at least one grid-tied inverter other than the one inverter (for example, the energy management system sets a corresponding output power setpoint, and sends a control signal corresponding to the output power setpoint to a corresponding inverter) to ensure the continuous operation of the hybrid inverter parallel system.

**In** some embodiments, before the sending, by the energy management system, the output power setpoint of the grid-tied inverter to the grid-tied inverter, the above control method also includes: acquiring, by the energy management system, a grid power threshold, and after the output power setpoint of the grid-tied inverter is generated, determining, by the energy management system, whether the output power setpoint of the grid-tied inverter is greater than the grid power threshold; and if the output power setpoint of the grid-tied inverter is greater than the grid power threshold, using, by the energy management system, the grid power threshold as an updated output power setpoint of the grid-tied inverter, that is, the output power setpoint of the grid-tied inverter in the Step S102 is updated to the grid power threshold.

Due to the requirements of the grid, there are often certain restrictions on grid-connected power of a residential energy storage system, so while implementing the target operating mode, the restrictions on the grid-connected power (that is, the grid power threshold described above, which is determined based on the actual situation in each region) may also be taken into account. While the grid power threshold's setting meets the requirements of the grid, it may also be dynamically adjusted based on a real-time grid status, weather conditions, and load demand. Further, according to the embodiment of the present invention, a multi-stage grid power threshold may also be designed (the multi-stage grid power threshold refers to different thresholds set according to different time periods or different operating conditions).

Based on the above settings, by determining whether the output power setpoint is greater than the grid power threshold after the output power setpoint of the grid-tied inverter is generated, and adjusting the output power setpoint to the grid power threshold if necessary, it is possible to ensure that the grid-connected power of the hybrid inverter parallel system does not exceed the limits specified by the grid, which helps to avoid power outages or other problems caused by exceeding the limit to ensure the safe operation of the hybrid inverter parallel system, which may also reduce voltage fluctuations and frequency deviations, and improve the stability and reliability of the hybrid inverter parallel system. At the same time, based on the limit on the grid-connected power described above, the energy storage inverter may release electric energy within the energy storage battery to satisfy load demand, thereby maximizing the use of photovoltaic energy, reducing dependence on the grid, and improving green energy efficiency.

In some embodiments, when the target operating mode is a self-consumption mode, an energy output priority of the hybrid inverter parallel system is a load, an energy storage battery, and the grid in a prioritized sequence; and when the target operating mode is a grid priority mode, the energy output priority of the hybrid inverter parallel system is the load, the grid, and the energy storage battery in a prioritized sequence. Based on the energy output priority indicated by the self-consumption mode or the grid priority mode, the operation data of the devices in the hybrid inverter parallel system acquired by the energy management system includes-at the current moment-the output power of the energy storage inverter, the output power of the grid-tied inverter, the output power of the photovoltaic module, the maximum output power of the photovoltaic module, the SOC of the energy storage battery, the charging/discharging power of the energy storage battery, and the maximum charging/discharging power of the energy storage battery.

The hybrid inverter parallel system provided in the embodiments of the present invention is a residential energy storage system, which may prioritize users' load demand, so the highest energy output priority in the target operating mode is always to supply power to the load. The main difference between the self-consumption mode and the grid priority mode lies mainly in the second priority: whether to supply power to the grid or the energy storage battery first. Therefore, based on the different target operating modes, there is a slight difference in the specific target of the operation data of the devices in the hybrid inverter parallel system obtained by the energy management system.

By setting different target operating modes and configuring different energy output priorities, the energy management system may rationally distribute and utilize energy based on the target operating mode (self-consumption mode or grid priority mode), so that the hybrid inverter parallel system balances energy flow, reduces voltage fluctuations and frequency deviations, and provides a more stable power supply effect, thereby improving the stability and reliability of the hybrid inverter parallel system, enhancing user experience, and helping to maximize the use of photovoltaic energy, reducing dependence on the grid and improving energy efficiency.

Specifically, according to a specific implementation method of the embodiments of the present invention, under the self-consumption mode, the hybrid inverter parallel system prioritizes meeting local load demand, and excess electric energy is stored in the energy storage battery before finally being fed into the grid. This helps users save on electricity bills and makes the hybrid inverter parallel system more self-sufficient. At the same time, under the grid priority mode, the hybrid inverter parallel system prioritizes meeting local load demand, then feeds excess power directly into the grid, and finally considers the energy storage battery. This helps users get more revenue from electricity sales from a grid compony.

In some embodiments, when the target operating mode is a self-consumption mode or a grid priority mode, the above control method also includes: acquiring, by the energy management system, a grid power threshold at a current moment, and generating, by the energy management system, an output power intermediate setpoint corresponding to the grid-tied inverter and an output power intermediate setpoint corresponding to the energy storage inverter based on the energy output priority indicated by the self-consumption mode or the grid priority mode, and the load power demand, the grid meter power, the grid power threshold and the operation data of the devices that are acquired at the current moment; sending, by the energy management system, the output power intermediate setpoint corresponding to the grid-tied inverter to the grid-tied inverter and sending, by the energy management system, the output power intermediate setpoint corresponding to the energy storage inverter to the energy storage inverter, so that the grid-tied inverter and the energy storage inverter adjust the respective actual output power values based on the output power intermediate setpoint corresponding to grid-tied inverter and the output power intermediate setpoint corresponding to the energy storage inverter, respectively; reacquiring, by the energy management system at the next set time, load power demand, grid meter power, grid-connected power threshold and operation data of the devices based on the energy output priority indicated by the self-consumption mode or the grid priority mode, and generating, by the energy management system, the output power intermediate setpoint corresponding to the grid-connected inverter and the output power intermediate setpoint corresponding to the energy storage inverter based on the energy output priority indicated by the self-consumption mode or the grid priority mode as well as the load power demand, the grid-connected meter power, the grid-connected power threshold and the operation data of the devices that re acquired at the next set time.

Considering the fluctuation of load demand and photovoltaic power generation, and limit on the grid power threshold, the output power setpoint may be gradually generated, that is, by reacquiring the load power demand, the grid meter power, the grid power threshold and the operation data of the devices at each set time and generating a new output power setpoint based on these data, the energy management system enables dynamic adjustment of the actual output power of the grid-tied inverter and the actual output power of the energy storage inverter, improving the real-time response capability of the hybrid inverter parallel system, improving the flexibility and adaptability of the hybrid inverter parallel system, thereby achieving better control effects and preset operation effects.

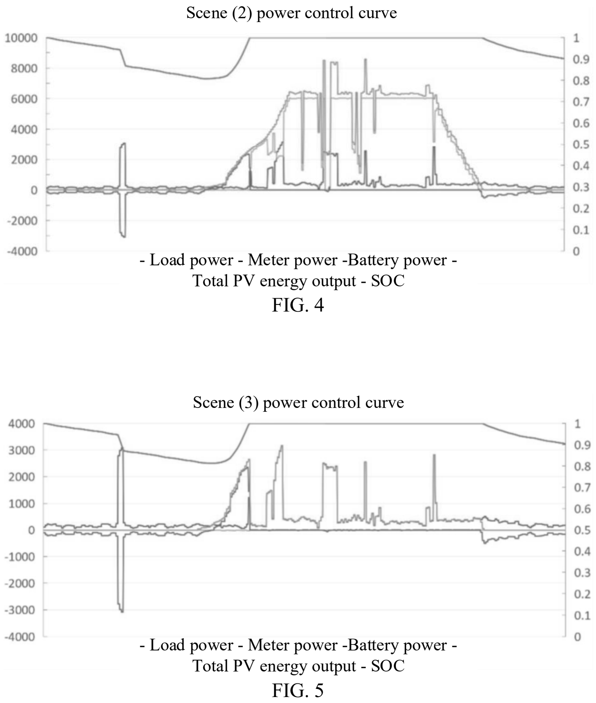

According to a specific implementation method of the embodiments of the present invention, in order to demonstrate the control effect of the embodiments of the present invention combined with limit on the grid-connected power, Figure 3, Figure 4, and Figure 5 respectively show embodiments of case simulation for three scenarios: scene (1) self-consumption mode (no limit on grid-connected power); scenario (2) self-consumption mode (limited grid-connected power = 6000 W); and scenario (3) self-consumption mode (limited grid-connected power = 0 W). At the same time, in this simulation example, the rated output power of the energy storage inverter is set to be equal to 10 kW, capacity of the energy storage battery is set to be equal to 10 kW•h, initial SOC of the energy storage battery is set to be equal to 100%, maximum charging power of the energy storage battery is set to be equal to 5 kW, maximum discharging power of the energy storage battery is set to be equal to 5 kW, and rated power of the grid-tied inverter is set to be equal to 10 kW. The load power demand is typical residential power, and the available PV energy output is typical PV power on a sunny day. As can be seen from the power control curves in Figure 3, Figure 4, and Figure 5, by adopting the grid-connected power limit strategy implemented based on the grid power threshold, the control effect of system-level operating mode of the hybrid inverter parallel system is achieved, and it is also possible to implement control of limit on the grid-connected power, which helps to improve energy efficiency.

**In** some embodiments, when the target operating mode is an energy storage priority mode, the energy output priority of the hybrid inverter parallel system is the load and the grid in a prioritized sequence, and under the energy storage priority mode, the energy storage battery corresponding to the energy storage inverter does not perform a discharge operation. The operation data of the devices in the hybrid inverter parallel system acquired by the energy management system based on the energy output priority indicated by the energy storage priority mode includes-at the current moment-the output power of energy storage inverter, the output power of the grid-tied inverter, the output power of the photovoltaic module, the maximum output power of the photovoltaic module, the SOC of the energy storage battery, the charging power of the energy storage battery, and the maximum charging power of the energy storage battery.

Adopting the energy storage priority mode helps to protect the energy storage battery and avoid shortening the life of the energy storage battery due to excessive discharge of the energy storage battery. Under this energy storage priority mode, the discharge operation of the energy storage battery is not considered. Therefore, there is no need to obtain the discharging power and maximum discharging power of the energy storage battery at the current moment. While the load demand and the limit on the grid-connected power are met, the corresponding output power setpoint is generated.

Step S103, sending, by the energy management system, the output power setpoint of the grid-tied inverter to the grid-tied inverter, and sending, by the energy management system, the output power setpoint of the energy storage inverter to the energy storage inverter, so that the grid-tied inverter and the energy storage inverter adjust respective actual output power values based on the output power setpoint of the grid-tied inverter and the output power setpoint of the energy storage inverter, respectively.

The energy management system sends the output power setpoint of the grid-tied inverter and the output power setpoint of the energy storage inverter to the corresponding inverters to ensure that each inverter can adjust its actual output power according to accurate power instructions. This improves the output power control accuracy of the inverters, so that the hybrid inverter parallel system may more accurately meet the requirements of the target operating mode. Through accurate power control, the hybrid inverter parallel system may balance the energy flow, reduce voltage fluctuations and frequency deviations, and improve the stability and reliability of the hybrid inverter parallel system.

In some embodiments, the step for adjusting the actual output power values of the grid-tied inverter and the energy storage inverter based on the output power setpoint of the grid-tied inverter and the output power setpoint of the energy storage inverter, respectively, includes:

if the output power setpoint of the energy storage inverter is less than the actual output power of the energy storage inverter, controlling, by the energy storage inverter, the photovoltaic module corresponding to the energy storage inverter to reduce the output power of the photovoltaic module corresponding to the energy storage inverter to adjust the actual output power value of the energy storage inverter to the output power setpoint of the energy storage inverter;

if the output power setpoint of the grid-tied inverter is less than the actual output power of the grid-tied inverter, controlling, by the grid-tied inverter, the photovoltaic module corresponding the grid-tied inverter control to reduce the output power of the photovoltaic module corresponding to the grid-tied inverter to adjust the actual output power value of the grid-tied inverter to the output power setpoint of the grid-tied inverter;

if the output power setpoint of the energy storage inverter is greater than the actual output power of the energy storage inverter, controlling, by the energy storage inverter, the photovoltaic module corresponding to the energy storage inverter to increase the output power of the photovoltaic module and/or controlling, by the energy storage inverter, discharge of the energy storage battery to adjust the actual output power of the energy storage inverter to a value closest to the output power setpoint of the energy storage inverter;

if the output power setpoint of the grid-tied inverter is greater than the actual output power of the grid-tied inverter, controlling, by the grid-tied inverter, the photovoltaic module corresponding to the grid-tied inverter to increase the output power of the photovoltaic module corresponding to the grid-tied inverter and/or controlling, by the grid-tied inverter, to reduce the grid-connected power to adjust the actual output power value of the grid-tied inverter to a value where a deviation from the output power setpoint of the grid-tied inverter is within the preset tolerance range.

By comparing the output power setpoint with the actual output power in real time, the hybrid inverter parallel system can accurately adjust the energy flow among the photovoltaic module, the energy storage battery and the grid, making the power output of the hybrid inverter parallel system highly consistent with the target operating mode, improving the control accuracy of the hybrid inverter parallel system.

Specifically, when the output power setpoint of the energy storage inverter is less than the actual output power, the energy entering the energy storage inverter may be reduced by reducing the output power of the photovoltaic module, so that the actual output power value is reduced to the output power setpoint. This helps to prevent the energy storage battery from being overcharged, lengthening life of a battery, and improving the reliability and stability of the hybrid inverter parallel system.

When the output power setpoint of the grid-tied inverter is less than the actual output power, by reducing the output power of the photovoltaic module, the energy entering the grid-tied inverter may be reduced, so that the actual output power value is reduced to the output power setpoint. This helps to ensure that the grid-connected power does not exceed the limits specified by the grid, avoiding the problem of exceeding the limit, and enhancing the safety of the hybrid inverter parallel system.

When the output power setpoint of the energy storage inverter is greater than the actual output power, the energy entering the energy storage inverter may be increased by increasing the output power of the photovoltaic module, so that the actual output power value is increased to the output power setpoint. If the output power of the photovoltaic module is insufficient to reach the output power setpoint, energy may be supplemented by controlling discharge of the energy storage battery to meet the output power setpoint. This helps to ensure that the actual output power of the energy storage inverter reaches the output power setpoint, meeting energy demand of the hybrid inverter parallel system, and improving the response speed and flexibility of the hybrid inverter parallel system.

When the output power setpoint of the grid-tied inverter is greater than the actual output power, energy entering the grid-tied inverter may be increased by increasing the output power of the photovoltaic module, so that the actual output power value is increased to the output power setpoint. If the output power of the photovoltaic module is insufficient to reach the output power setpoint, the energy flow of the hybrid inverter parallel system may be balanced by reducing the grid-connected power to meet the output power setpoint. This helps to ensure that the actual output power of the grid-tied inverter reaches the output power setpoint, meeting energy demand of the hybrid inverter parallel system, while maintaining the stability of the hybrid inverter parallel system.

It should be noted that since the total energy output of the hybrid inverter parallel system is affected by a state of photovoltaic power generation, a state the energy storage battery, and a state of the grid, the actual output power value of the inverter cannot be adjusted to the output power setpoint under all operating conditions. Under such conditions, it is enough to adjust the actual output power value of the inverter to the value closest to the output power setpoint. For example, the actual output power value of the inverter is adjusted to a value where a deviation from the output power setpoint is within a preset tolerance range (for example, -5% to 5%), in this way, the operating effect preset in the target operating mode can also be achieved to the greatest extent.

In some embodiments, the hybrid inverter parallel system includes an energy storage inverter system including multiple energy storage inverters and a grid-tied inverter system including multiple grid-tied inverters. The control method also includes: sending, by the energy management system, an output power setpoint of the grid-tied inverter to the grid-tied inverter system, and sending, by the energy management system, an output power setpoint of the energy storage inverter to the energy storage inverter system, so that the grid-tied inverter system adjusts the actual output power value of the grid-tied inverter based on the output power setpoint of the grid-tied inverter, and the energy storage inverter system adjusts the actual output power value of the grid-tied inverter based on the output power setpoint of the energy storage inverter.

The above steps provide another control strategy for the hybrid inverter parallel system, that is, introducing concepts of a main system and a subsystem. The energy storage inverter system is built based on multiple energy storage inverters in the hybrid inverter parallel system, and the grid-tied inverter system is built based on multiple grid-tied inverters in the hybrid inverter parallel system. The two subsystems (i.e., the energy storage inverter system and the grid-tied inverter system) establish communication with the energy management system to adjust the actual output power values of the inverters within respective systems in response to the output power setpoints sent by the energy management system. This ensures the overall coordination and consistency of the hybrid inverter parallel system and avoids problems of inconsistent control caused by lack of communication when multiple units are connected in parallel.

At the same time, the energy storage inverter system may distribute energy more reasonably to all energy storage inverters in the hybrid inverter parallel system based on the output power setpoints of the energy storage inverters, or the grid-tied inverter system may distribute energy more reasonably to all grid-tied inverters in the hybrid inverter parallel system based on the output power setpoints of the grid-tied inverters. This helps to maximize the use of photovoltaic energy, reduce dependence on the grid, and improve energy efficiency. Through the centralized control of the energy management system, the energy flow of the hybrid inverter parallel system may be balanced, voltage fluctuations and frequency deviations may be reduced, and the stability and reliability of the hybrid inverter parallel system may be improved. This helps to provide a more stable power supply and enhances the user experience. The subsystem (that is, the energy storage inverter system or the grid-tied inverter system) may ensure that the grid-connected power of the main system (that is, the hybrid inverter parallel system) does not exceed the limits specified by the grid (such as grid power threshold) based on the grid meter power and the target operating mode to avoid power outages or other problems caused by exceeding the limit. This helps to ensure the efficient, stable and reliable operation of the hybrid inverter parallel system to meet the needs of various application scenarios.

**In** the control method for the hybrid inverter parallel system provided by the embodiments of the present invention, the energy management system acquires a target operating mode of a hybrid inverter parallel system, where the hybrid inverter parallel system includes at least one grid-tied inverter and at least one energy storage inverter; the grid-tied inverter and the energy storage inverter are configured to be connected to a photovoltaic module, the grid-tied inverter and the energy storage inverter are operably connected in parallel to an AC bus; the energy management system acquires load power demand, grid meter power, and operation data of devices in the hybrid inverter parallel system based on the target operating mode, and generates an output power setpoint of the grid-tied inverter and an output power setpoint of the energy storage inverter based on the target operating mode, the load power demand, the operation data of the devices; and the energy management system sends the output power setpoint of grid-tied inverter to the grid-connected inverter and sends the output power setpoint of the energy storage inverter to the energy storage inverter, so that the grid-connected inverter and the energy storage inverter adjust their respective actual output power values based on the output power setpoint of the grid-connected inverter and the output power setpoint of the energy storage inverter, respectively. This overcomes the problem that in related technologies, it is difficult for the hybrid inverter parallel system that includes energy storage inverters and grid-connected inverters to achieve system-level operating mode control, and a control effect of output power of the inverter is poor, and user experience is poor, which limits enthusiasm of users to purchase additional photovoltaic systems and limits development of the photovoltaic industry. By adding the energy management system to communicate with the devices in the hybrid inverter parallel system, the output power of the energy storage inverter and the grid-tied inverter can be set and controlled by the energy management system, an operation effect corresponding to the system-level operating mode is achieved, the user experience is enhanced, and technical effects of promotion and application of the hybrid inverter parallel system are expanded.

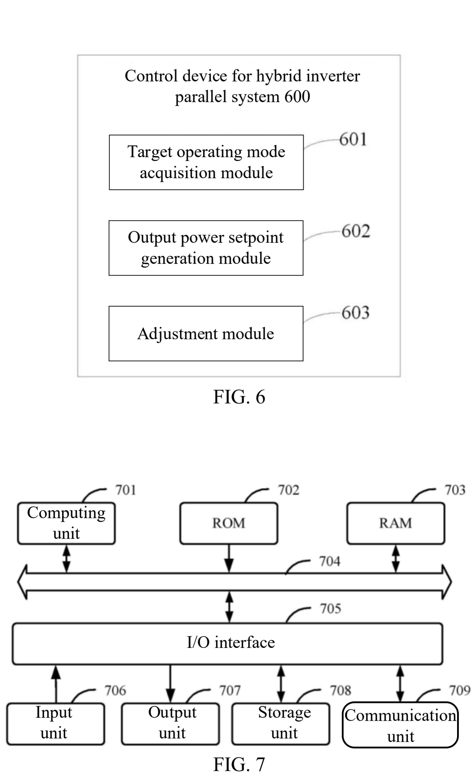

Based on the control method for the hybrid inverter parallel system provided in the embodiments of the present invention, the embodiments of the present invention also provide a control device for a hybrid inverter parallel system, which is applied to the energy management system. The energy management system may be set independently of the hybrid inverter parallel system or integrated within the hybrid inverter parallel system. As shown in Figure 6, the control device 600 for the hybrid inverter parallel system includes: a target operating mode acquisition module 601, an output power setpoint generation module 602, and an adjustment module 603.

The target operating mode acquisition module 601 is configured to acquire a target operating mode of the hybrid inverter parallel system, where the hybrid inverter parallel system includes at least one grid-tied inverter and at least one energy storage inverter, each grid-tied inverter in the at least one grid-tied inverter and each energy storage inverter in the at least one energy storage inverter are configured to be connected to a photovoltaic module, and the grid-tied inverter and the energy storage inverter are operably connected in parallel to an alternating current bus.

Through the above settings, using the energy management system as a central controller, the target operating mode of the hybrid inverter parallel system is first acquired to provide guidance for subsequent power distribution and required data, which helps to ensure that the hybrid inverter parallel system can operate based on a preset operating mode, thereby achieving a preset operation effect. By acquiring the target operating mode, the energy management system may also optimize an energy flow of the hybrid inverter parallel system and improve energy output efficiency of the hybrid inverter parallel system. For example, the use of photovoltaic energy is prioritized when light is sufficient, and power supply is switched to the energy storage battery or the grid when the light is insufficient, thereby maximizing the use of energy. In addition, users can also configure and monitor an operating status of the hybrid inverter parallel system by themselves through the energy management system to further meet users' load demand and enhance the user experience.

The output power setpoint generation module 602 is configured to acquire load power demand, grid meter power, and operation data of devices in the hybrid inverter parallel system based on the target operating mode, and generate an output power setpoint of the grid-tied inverter and an output power setpoint of the energy storage inverter based on the target operating mode, the load power demand, the grid meter power, and the operation data of the devices in the hybrid inverter parallel system.

Through the above settings, the energy management system may dynamically adjust the output power of the grid-tied inverter and the output power of the energy storage inverter based on the target operating mode, the load demand, and the real-time operating power data of the devices in the hybrid inverter parallel system, making maximum use of photovoltaic energy while protecting users' load demand, reducing dependence on the grid, improving energy utilization efficiency, and achieving accurate distribution and control of inverter output power. Accurate power distribution helps to balance the energy flow in the hybrid inverter parallel system, reduce voltage fluctuations and frequency deviations, and improve the stability and reliability of the hybrid inverter parallel system. Furthermore, by distributing power based on the load power demand, the hybrid inverter parallel system can better respond to users' load demand, provide a stable power supply, and enhance the user experience.

In some embodiments, the control device 600 for the hybrid inverter parallel system also includes a grid-connected power limit module configured to acquire a grid power threshold and determine whether the output power setpoint of the grid-tied inverter is greater than the grid power threshold; if the output power setpoint of the grid-tied inverter is greater than the grid power threshold, update the output power setpoint of the grid-tied inverter to the grid power threshold.

Based on the above settings, by determining whether the output power setpoint is greater than the grid power threshold after the output power setpoint of the grid-tied inverter is generated, and adjusting the output power setpoint to the grid power threshold if necessary, it is possible to ensure that the grid-connected power of the hybrid inverter parallel system does not exceed the limits specified by the grid, which helps to avoid power outages or other problems caused by exceeding the limit to ensure the safe operation of the hybrid inverter parallel system, which may also reduce voltage fluctuations and frequency deviations, and improve the stability and reliability of the hybrid inverter parallel system.

In some embodiments, the target operating mode includes any one of a self-consumption mode and a grid priority mode; when the target operating mode is the self-consumption mode, an energy output priority of the hybrid inverter parallel system is a load, an energy storage battery, and a grid in a prioritized sequence; and when the target operating mode is the grid priority mode, the energy output priority of the hybrid inverter parallel system is the load, the grid, and the energy storage battery in a prioritized sequence.

In some embodiments, the acquiring, by the energy management system, load power demand, grid meter power, and operation data of devices in the hybrid inverter parallel system based on the target operating mode includes: acquiring, by the energy management system, the load power demand, the grid meter power, and the operation data of the devices in the hybrid inverter parallel system at the current moment based on the energy output priority indicated by the self-consumption mode or the grid priority mode. The operation data of the devices in the hybrid inverter parallel system acquired at the current moment includes output power of the energy storage inverter, output power of the grid-tied inverter, output power of the photovoltaic module, maximum output power of the photovoltaic module, SOC of the energy storage battery, charging/discharging power of the energy storage battery, and maximum charging/discharging power of the energy storage battery.

By setting different operating modes and configuring different energy output priorities, the energy management system may rationally distribute and utilize energy based on the target operating mode (the self-consumption mode or the grid priority mode), thereby achieving balanced energy flow in the hybrid inverter parallel system, reducing voltage fluctuations and frequency deviations, and providing a more stable power supply effect, thereby improving the stability and reliability of the hybrid inverter parallel system, improving user experience, and helping to maximize the use of photovoltaic energy, reducing dependence on the grid and improving energy utilization efficiency.

In some embodiments, when the target operating mode is a self-consumption mode or a grid priority mode, the target operating mode acquisition module 601 is also configured to acquire a grid power threshold; the output power setpoint generation module 602 is also configured to generate an output power intermediate setpoint corresponding to the grid-tied inverter and an output power intermediate setpoint corresponding to the energy storage inverter based on the energy output priority indicated by the self-consumption mode or the grid priority mode as well as the load power demand, the grid meter power, the grid power threshold, and the operation data of devices in the hybrid inverter parallel system acquired at the current moment; and the output power setpoint generation module 602 is also configured to reacquire load power demand, grid meter power, grid power threshold and operation data of devices in the hybrid inverter parallel system at a next set moment based on the energy output priority indicated by the self-consumption mode or the grid priority mode, and generate an output power setpoint corresponding to the energy storage inverter and an output power setpoint corresponding to the grid-tied inverter based on the energy output priority indicated by the self-consumption mode or the grid priority mode as well as the load power demand, the grid meter power, the grid power threshold and the operation data of the devices in the hybrid inverter parallel system acquired at the next set moment.

By reacquiring the load power demand, the grid meter power, the grid power threshold and the operation data of the devices at each set time and generating a new output power setpoint based on these data, the energy management system enables dynamic adjustment of the actual output power of the grid-tied inverter and the actual output power of the energy storage inverter, improving the real-time response capability of the hybrid inverter parallel system, improving the flexibility and adaptability of the hybrid inverter parallel system, thereby achieving better control effects and preset operation effects.

In some embodiments, when the target operating mode is an energy storage priority mode, the energy output priority of the hybrid inverter parallel system is the load and the grid in a prioritized sequence, and under the energy storage priority mode, the energy storage battery corresponding to the energy storage inverter does not perform the discharge operation; and the acquiring, by the energy management system, the load power demand, the grid meter power, and operation data of the device in the hybrid inverter parallel system based on the target operating mode includes: acquiring, by the energy management system, the load power demand, the grid meter power, and the operation data of the devices in the hybrid inverter parallel system at the current time based on the energy output priority indicated by the self-consumption mode or the grid priority mode. The operation data of the devices in the hybrid inverter parallel system acquired at the current moment includes output power of the energy storage inverter, output power of the grid-tied inverter, output power of the photovoltaic module, maximum output power of the photovoltaic module, SOC of the energy storage battery, the charging power of the energy storage battery, and the maximum charging power of the energy storage battery.

Under the energy storage priority mode, the discharge operation of the energy storage battery is not considered, so there is no need to obtain discharging power and maximum discharging power of the energy storage battery at the current moment, and the corresponding output power setpoint can be generated when the load demand and limit on grid-connected power are met.

The adjustment module 603 is configured to send the output power setpoint of the grid-tied inverter to the grid-tied inverter, and send the output power setpoint of the energy storage inverter to the energy storage inverter, so that the grid-tied inverter and the energy storage inverter adjust the respective actual output power values based on the output power setpoint of the grid-tied inverter and the output power setpoint of the energy storage inverter, respectively.

The energy management system sends the output power setpoint of the grid-tied inverter and the output power setpoint of the energy storage inverter to the corresponding inverters to ensure that each inverter can adjust its actual output power according to accurate power instructions. This improves the output power control accuracy of the inverters, so that the hybrid inverter parallel system may more accurately meet the requirements of the target operating mode.

Based on the control method for the hybrid inverter parallel system provided by the embodiments of the present invention, the embodiments of the present invention also provide another control device for a hybrid inverter parallel system, which is applied to the energy storage inverter and the grid-tied inverter. The control device includes a control module for controlling a photovoltaic module corresponding to the energy storage inverter to reduce output power of the photovoltaic module corresponding to the energy storage inverter, to adjust the actual output power value of the energy storage inverter to the output power setpoint of the energy storage inverter if the output power setpoint of the energy storage inverter is less than the actual output power value of the energy storage inverter; controlling a photovoltaic module corresponding to the energy storage inverter to increase output power of the photovoltaic module corresponding to the energy storage inverter and/or controlling discharge of an energy storage battery, to adjust the actual output power value of the energy storage inverter to a value wherein a deviation from the output power setpoint of the energy storage inverter is within a preset tolerance range if the output power setpoint of the energy storage inverter is greater than the actual output power of the energy storage inverter; controlling a photovoltaic module corresponding to the grid-tied inverter to reduce output power of the photovoltaic module corresponding to the grid-tied inverter, to adjust the actual output power value of the grid-tied inverter to the output power setpoint of the grid-tied inverter if the output power setpoint of the grid-tied inverter is less than the actual output power value of the grid-tied inverter; and controlling a photovoltaic module corresponding to the grid-tied inverter to increase output power of the photovoltaic module corresponding to the grid-tied inverter and/or controlling to reduce grid-connected power, to adjust the actual output power value of the grid-tied inverter to a value wherein a deviation from the output power setpoint of the grid-tied inverter is within a preset tolerance range if the output power setpoint of the grid-tied inverter is greater than the actual output power of the grid-tied inverter.

By comparing the output power setpoint with the actual output power in real time, the hybrid inverter parallel system can accurately adjust the energy flow among the photovoltaic module, the energy storage battery and the grid, making the power output of the hybrid inverter parallel system highly consistent with the target operating mode, improving the control accuracy of the hybrid inverter parallel system.

In the control device for the hybrid inverter parallel system provided by the embodiments of the present invention, the energy management system acquires a target operating mode of a hybrid inverter parallel system, where the hybrid inverter parallel system includes at least one grid-tied inverter and at least one energy storage inverter; the grid-tied inverter and the energy storage inverter are configured to be connected to a photovoltaic module, the grid-tied inverter and the energy storage inverter are operably connected in parallel to an AC bus; the energy management system acquires load power demand, grid meter power, and operation data of devices in the hybrid inverter parallel system based on the target operating mode, and generates an output power setpoint of the grid-tied inverter and an output power setpoint of the energy storage inverter based on the target operating mode, the load power demand, the operation data of the devices; and the energy management system sends the output power setpoint of grid-tied inverter to the grid-connected inverter and sends the output power setpoint of the energy storage inverter to the energy storage inverter, so that the grid-connected inverter and the energy storage inverter adjust their respective actual output power values based on the output power setpoint of the grid-connected inverter and the output power setpoint of the energy storage inverter, respectively. This overcomes the problem that in related technologies, it is difficult for the hybrid inverter parallel system that includes energy storage inverters and grid-connected inverters to achieve system-level operating mode control, and a control effect of output power of the inverter is poor, and user experience is poor, which limits enthusiasm of users to purchase additional photovoltaic systems and limits development of the photovoltaic industry. By adding the energy management system to communicate with the devices in the hybrid inverter parallel system, the output power of the energy storage inverter and the grid-tied inverter can be set and controlled by the energy management system, an operation effect corresponding to the system-level operating mode is achieved, the user experience is enhanced, and technical effects of promotion and application of the hybrid inverter parallel system are expanded.

The embodiments of the present invention also provide a photovoltaic inverter system, which includes an energy management system and a hybrid inverter parallel system, where the hybrid inverter parallel system includes at least one grid-tied inverter and at least one energy storage inverter, and each grid-tied inverter in the at least one grid-tied inverter and each energy storage inverter in the at least one energy storage inverter are configured to be connected to a photovoltaic module, and the grid-tied inverter and the energy storage inverter are operably connected in parallel to an AC bus; and the energy management system communicates with the hybrid inverter parallel system (for example, devices within the hybrid inverter parallel system), and is configured to acquire load power demand, grid meter power and operation data of devices in the hybrid inverter parallel system based on the target operating mode, and generate the output power setpoint of the grid-tied inverter and the output power setpoint of the energy storage inverter based on the target operating mode, the load power demand, the grid meter power, and the operation data of the devices in the hybrid inverter parallel system; send the output power setpoint of the grid-connected inverter to the grid-connected inverter, and send the output power setpoint of the energy storage inverter to the energy storage inverter, so that the grid-connected inverter and the energy storage inverter can adjust respective actual output power values based on the output power setpoint of the grid-connected inverter and the output power setpoint of the energy storage inverter.

The embodiments of the present invention also provide a non-transitory machine-readable medium for storing a computer program that, when executed by a processor of a computer, causes the computer to carry out the control method according to any one of the embodiments of the present invention.

The embodiments of the present invention also provide a computer program product including a computer program that, when executed by a processor of a computer, causes the computer to carry out the control method according to any one of the embodiments of the present invention. The computer program product shall be understood as a software product that mainly implements the control method described above in the present application through a computer program.

The embodiments of the present invention also provide an electronic apparatus including: at least one processor; and a memory connected in communication with the at least one processor. The memory stores a computer program that can be executed by the at least one processor, and when executed by the at least one processor, the computer program causes the electronic apparatus to carry out the control method according to any one of the embodiments of the present invention.

Referring to Figure 7, it illustrates a structural block diagram of an electronic apparatus that may be used as a server or a client according to an embodiment of the present invention, and it is an example of a hardware apparatus that may be applied to various aspects of the present invention. The Electronic apparatus represents various forms of computer apparatuses of digital electronics, such as a laptop, a desktop computer, a workbench, a personal digital assistant, a server, a blade server, a large computer, and other suitable computers. The Electronic apparatus may also represent various forms of mobile devices, such as personal digital processing, a cellular phone, a smart phone, a wearable apparatus, and other similar computing devices. The components shown herein, their connections and relationships, as well as their functions are examples only, and are not intended to limit the implementation of the present invention described and/or required herein.

As shown in Figure 7, the electronic apparatus includes a computing unit 701, which may perform various appropriate actions and processing based on computer programs stored in a Read-Only Memory (ROM) 702 or computer programs loaded from a storage unit 708 to a Random Access Memory (RAM) 703. In the RAM 703, various programs and data required for the operation of the electronic apparatus may also be stored. The computing unit 701, the ROM 702, and the RAM 703 are connected to each other via a bus 704. An input/output (I/O) interface 705 is also connected to the bus 704.

Multiple components in the electronic apparatus are connected to the I/O interface 705, and include: an input unit 706, an output unit 707, a storage unit 708, and a communication unit 709. The input unit 706 may be any type of apparatus capable of inputting information to the electronic apparatus. The input unit 706 may receive inputted numeric or character information and generate key-signal input relating to user settings and/or function control of the electronic apparatus. The output unit 707 may be any type of apparatus capable of presenting information, and may include, but is not limited to, a display, a speaker, a video/audio output terminal, a vibrator, and/or a printer. The storage unit 708 may include, but is not limited to, a disk or an optical disk. The communication unit 709 allows the electronic apparatus to exchange information/data with other apparatuses through a computer network such as the Internet and/or various telecommunication networks, and may include, but is not limited to, modems, network cards, infrared communication apparatuses, and/or wireless communication transceivers, such as Bluetooth apparatuses, WiFi apparatuses, WiMAX apparatuses, cellular communication apparatuses, and/or the like.

The computing unit 701 may be a variety of general and/or specialized processing components with processing and computational capabilities. Some examples of the compute unit 701 include, but are not limited to, CPUs, Graphics Processing Units (GPUs), various specialized Artificial Intelligence (AI) computing units, various computing units that run machine learning model algorithms, Digital Signal Processors (DSPs), and any appropriate processor, controller, microcontroller, etc. The compute unit 701 performs each of the methods and processes described above. For example, in some embodiments, the method embodiments of the present invention may be implemented as a computer program, which is physically contained in a machine-readable medium, such as the storage unit 708. In some embodiments, part or all of a computer program may be loaded and/or installed on the electronic apparatus via the ROM 702 and/or the communication unit 709. In some embodiments, the computing unit 701 may be configured to perform the above methods by any other appropriate means (for example, with the help of firmware).

A computer program for implementing the control method of the embodiments of the present invention may be written using any combination of one or more programming languages. These computer programs may be provided to a processor or a controller of a general-purpose computer, a special computer, or other programmable data processing device, so that the functions/operations specified in the flow chart and/or block diagram are implemented when the computer program is executed by the processor or the controller. A computer program may be executed entirely on a machine, partially on a machine, partially on a machine as a standalone software package, partially on a remote machine, or entirely on a remote machine or a server.

In the context of the embodiments of the present invention, a machine-readable medium may be a tangible medium which may contain or store programs for use in an instruction execution system, apparatus, or device or in combination with an instruction execution system, apparatus, or device. The machine-readable medium may be a machine-readable signal medium or a machine-readable storage medium. The machine-readable signal medium may include, but is not limited to, an electronic, magnetic, optical, electromagnetic, or infrared system, apparatus or device, or any suitable combination of the above. More specific examples of the machine-readable storage medium include electrical connections based on one or more wires, laptop disks, hard drives, Random Access Memory (RAM), Read-Only Memory (ROM), Erasable Programmable Read-Only Memory (EPROM or flash memory), optical fiber, portable Compact Disk Read-Only Memory (CD-ROM), optical storage apparatuses, magnetic storage apparatuses, or any suitable combination of the above.

It should be noted that the term "including" and its variants used in the embodiments of the present invention are open-inclusive, that is, "including but not limited to". The term "based on" is "at least partially based". The term "an embodiment" means "at least one embodiment"; the term "another embodiment" indicates "at least one additional embodiment"; and the term "some embodiments" means "at least some embodiments". The "one" and "multiple" modifications mentioned in the embodiment of the present invention are indicative rather than restrictive, and those skilled in the art should understand it indicate "one or more" unless the context clearly indicates otherwise.

The information (including but not limited to apparatus information, etc.) and data (including but not limited to analyzed data, stored data, display data, etc.) involved in the embodiments of the present invention are all information and data authorized by the users or fully authorized relevant parties, and the collection, use and processing of the relevant data must comply with the relevant laws, regulations and standards of the relevant countries and regions, and corresponding operation entrances are provided for the users to choose to authorize or refuse.

The steps described in the method implementation provided in the embodiments of the present invention may be executed in a different order and/or executed in parallel. Furthermore, the method implementation may include additional steps and/or omit the steps shown. The scope of protection of the present invention is not limited in this respect.

The term "embodiment" in this specification indicates that specific features, structures, or characteristics described in conjunction with embodiments may be included in at least one embodiment of the present invention. The various places where the phrase appears in the specification does not necessarily mean the same embodiments, nor does it mean that they are mutually exclusive and independent or optional from other embodiments. The embodiments in this specification are described in a related manner, and the same and similar parts of the embodiments refer to each other. In particular, for apparatus embodiments, device embodiments, and system embodiments, since they are basically similar to method embodiments, the description is relatively simple; refer to some explanations of method embodiments for related matters.

The embodiments described above only express a few embodiments of the present invention. The description is more specific and detailed, but it cannot be understood as a limitation on the scope of protection. It should be noted that those skilled in the art may make various modifications and improvements without departing from the spirit of the present invention, and all such modifications and improvements shall fall within the scope of protection of the present invention. Therefore, Accordingly, the scope of the present invention shall be determined by the appended claims.

## Claims

1. A control method for a hybrid inverter parallel system, **characterized by**, comprising:
acquiring, by an energy management system, a target operating mode of the hybrid inverter parallel system, wherein the hybrid inverter parallel system comprises at least one grid-tied inverter and at least one energy storage inverter, each grid-tied inverter in the at least one grid-tied inverter and each energy storage inverter in the at least one energy storage inverter are configured to be connected to a photovoltaic module, and the grid-tied inverter and the energy storage inverter are operably connected in parallel to an alternating current bus;
acquiring, by the energy management system, load power demand, grid meter power, and operation data of devices in the hybrid inverter parallel system based on the target operating mode, and generating, by the energy management system, an output power setpoint of the grid-tied inverter and an output power setpoint of the energy storage inverter based on the target operating mode, the load power demand, the grid meter power, and the operation data of the devices in the hybrid inverter parallel system; and
sending, by the energy management system, the output power setpoint of the grid-tied inverter to the grid-tied inverter, and sending, by the energy management system, the output power setpoint of the energy storage inverter to the energy storage inverter, so that the grid-tied inverter and the energy storage inverter adjust their respective actual output power values based on the output power setpoint of the grid-tied inverter and the output power setpoint of the energy storage inverter, respectively.

2. The control method of claim **1,** wherein before the sending, by the energy management system, the output power setpoint of the grid-tied inverter to the grid-tied inverter, the control method further comprises:
acquiring, by the energy management system, a grid power threshold and determining, by the energy management system, whether the output power setpoint of the grid-tied inverter is greater than the grid power threshold; and
if the output power setpoint of the grid-tied inverter is greater than the grid power threshold, updating, by the energy management system, the output power setpoint of the grid-tied inverter to the grid power threshold.

3. The control method of claim 1, wherein the target operating mode comprises any one of a self-consumption mode and a grid priority mode; when the target operating mode is the self-consumption mode, an energy output priority of the hybrid inverter parallel system is a load, an energy storage battery, and a grid in a prioritized sequence; and when the target operating mode is the grid priority mode, the energy output priority of the hybrid inverter parallel system is the load, the grid, and the energy storage battery in a prioritized sequence.

4. The control method of claim 3, wherein the acquiring, by the energy management system, the load power demand, the grid meter power, and the operation data of the devices in the hybrid inverter parallel system based on the target operating mode comprises:
acquiring, by the energy management system, the load power demand, the grid meter power, and the operation data of the devices in the hybrid inverter parallel system at a current moment based on the energy output priority indicated by the self-consumption mode or the grid priority mode, wherein the operation data of the devices in the hybrid inverter parallel system acquired at the current moment comprises: output power of the energy storage inverter, output power of the grid-tied inverter, output power of the photovoltaic module, maximum output power of the photovoltaic module, state of charge of the energy storage battery, charging/discharging power of the energy storage battery and maximum charging/discharging power of the energy storage battery,
wherein the generating, by the energy management system, the output power setpoint of the grid-tied inverter and the output power setpoint of the energy storage inverter based on the target operating mode, the load power demand, the grid meter power, and the operation data of the devices in the hybrid inverter parallel system comprises:
generating, by the energy management system, the output power setpoint of the grid-tied inverter and the output power setpoint of the energy storage inverter based on the energy output priority indicated by the self-consumption mode or the grid priority mode, and the load power demand, the grid meter power and the operation data of the devices in the hybrid inverter parallel system acquired at the current moment.

5. The control method of claim 3 or 4, further comprising:
acquiring, by the energy management system, a grid power threshold at the current moment;
generating, by the energy management system, an output power intermediate setpoint corresponding to the grid-tied inverter and an output power intermediate setpoint corresponding to the energy storage inverter based on the energy output priority indicated by the self-consumption mode or the grid priority mode as well as the load power demand, the grid meter power, the grid power threshold, and the operation data of devices in the hybrid inverter parallel system acquired at the current moment; and
sending, by the energy management system, the output power intermediate setpoint corresponding to the grid-tied inverter to the grid-tied inverter, and sending, by the energy management system, the output power intermediate setpoint corresponding to the energy storage inverter to the energy storage inverter, so that the grid-tied inverter and the energy storage inverter adjust the respective actual output power values based on the output power intermediate setpoint corresponding to the grid-tied inverter and the output power intermediate setpoint corresponding to the energy storage inverter, respectively.

6. The control method of any one of claims 3 to 5, further comprising:
reacquiring, by the energy management system, load power demand, grid meter power, grid power threshold and operation data of devices in the hybrid inverter parallel system at a next set moment based on the energy output priority indicated by the self-consumption mode or the grid priority mode, and generating an output power setpoint corresponding to the energy storage inverter and an output power setpoint corresponding to the grid-tied inverter based on the energy output priority indicated by the self-consumption mode or the grid priority mode as well as the load power demand, the grid meter power, the grid power threshold and the operation data of the devices in the hybrid inverter parallel system acquired at the next set moment.

7. The control method of claim 1, wherein the target operating mode comprises an energy storage priority mode; and when the target operating mode is the energy storage priority mode, an energy output priority of the hybrid inverter parallel system is a load and a grid in a prioritized sequence, and under the energy storage priority mode, an energy storage battery corresponding to the energy storage inverter does not perform a discharge operation;
wherein the acquiring, by the energy management system, the load power demand, the grid meter power, and the operation data of the devices in the hybrid inverter parallel system based on the target operating mode comprises:
acquiring, by the energy management system, the load power demand, the grid meter power, and the operation data of the devices in the hybrid inverter parallel system at a current moment based on the energy output priority indicated by the energy storage priority mode, wherein the operation data of the devices in the hybrid inverter parallel system acquired at the current moment comprises output power of the energy storage inverter, output power of the grid-tied inverter, output power of the photovoltaic module, maximum output power of the photovoltaic module, state of charge of the energy storage battery, and charging power of the energy storage battery, and maximum charging power of the energy storage battery.

8. The control method of claim 1, wherein in the case where the at least one grid-tied inverter comprises multiple grid-tied inverters, and the at least one energy storage inverter comprises multiple energy storage inverters, the hybrid inverter parallel system comprises an energy storage inverter system comprising the multiple energy storage inverters and a grid-tied inverter system comprising the multiple grid-tied inverters, and the control method further comprises:
sending, by the energy management system, the output power setpoint of the grid-tied inverter to the grid-tied inverter system, and sending, by the energy management system, the output power setpoint of the energy storage inverter to the energy storage inverter system, so that the grid-tied inverter system adjusts an actual output power value of the grid-tied inverter based on the output power setpoint of the grid-tied inverter, and the energy storage inverter system adjusts an actual output power value of the energy storage inverter based on the output power setpoint of the energy storage inverter.

9. A control method for a hybrid inverter parallel system, **characterized by**, comprising:
receiving, by each energy storage inverter in at least one energy storage inverter in the hybrid inverter parallel system, an output power setpoint of the energy storage inverter sent by an energy management system, and adjusting, by the energy storage inverter, an actual output power value of the energy storage inverter based on the output power setpoint of the energy storage inverter; and
receiving, by each grid-tied inverter in at least one grid-tied inverter in the hybrid inverter parallel system, an output power setpoint of the grid-tied inverter sent by the energy management system, and adjusting, by the grid-tied inverter, an actual output power value of the grid-tied inverter based on the output power setpoint of the grid-tied inverter.

10. The control method of claim 9, wherein the receiving, by each energy storage inverter in the at least one energy storage inverter in the hybrid inverter parallel system, the output power setpoint of the energy storage inverter sent by an energy management system, and adjusting, by the energy storage inverter, the actual output power value of the energy storage inverter based on the output power setpoint of the energy storage inverter comprises:
if the output power setpoint of the energy storage inverter is less than the actual output power value of the energy storage inverter, controlling, by the energy storage inverter, a photovoltaic module corresponding to the energy storage inverter to reduce output power of the photovoltaic module corresponding to the energy storage inverter, to adjust the actual output power value of the energy storage inverter to the output power setpoint of the energy storage inverter;
if the output power setpoint of the energy storage inverter is greater than the actual output power of the energy storage inverter, controlling, by the energy storage inverter, a photovoltaic module corresponding to the energy storage inverter to increase output power of the photovoltaic module corresponding to the energy storage inverter and/or controlling, by the energy storage inverter, discharge of an energy storage battery, to adjust the actual output power value of the energy storage inverter to a value wherein a deviation from the output power setpoint of the energy storage inverter is within a preset tolerance range.

11. The control method of claim 9, wherein receiving, by each grid-tied inverter in the at least one grid-tied inverter in the hybrid inverter parallel system, the output power setpoint of the grid-tied inverter sent by the energy management system, and adjusting, by the grid-tied inverter, the actual output power value of the grid-tied inverter based on the output power setpoint of the grid-tied inverter comprises:
if the output power setpoint of the grid-tied inverter is less than the actual output power value of the grid-tied inverter, controlling, by the grid-tied inverter, a photovoltaic module corresponding to the grid-tied inverter to reduce output power of the photovoltaic module corresponding to the grid-tied inverter, to adjust the actual output power value of the grid-tied inverter to the output power setpoint of the grid-tied inverter;
if the output power setpoint of the grid-tied inverter is greater than the actual output power of the grid-tied inverter, controlling, by the grid-tied inverter, a photovoltaic module corresponding to the grid-tied inverter to increase output power of the photovoltaic module corresponding to the grid-tied inverter and/or controlling, by the grid-tied inverter, to reduce grid-connected power, to adjust the actual output power value of the grid-tied inverter to a value wherein a deviation from the output power setpoint of the grid-tied inverter is within a preset tolerance range.

12. The control method of claim 9, wherein when a target operating mode of the hybrid inverter parallel system comprises any one of a self-consumption mode and a grid priority mode, the control method further comprises:
receiving, by the energy storage inverter, an output power intermediate setpoint corresponding to the energy storage inverter sent by the energy management system, and adjusting, by the energy storage inverter, an actual output power value of the energy storage inverter based on the output power intermediate setpoint corresponding to the energy storage inverter; and
receiving, by the grid-tied inverter, an output power intermediate setpoint corresponding to the grid-tied inverter sent by the energy management system, and adjusting, by the grid-tied inverter, an actual output power value of the grid-tied inverter based on the output power intermediate setpoint corresponding to the grid-tied inverter.

13. The control method of claim 9, wherein in the case where the at least one grid-tied inverter comprises multiple grid-tied inverters, and the at least one energy storage inverter comprises multiple energy storage inverters, the hybrid inverter parallel system comprises an energy storage inverter system comprising the multiple energy storage inverters and a grid-tied inverter system comprising the multiple grid-tied inverters, and the control method further comprises:
receiving, by the grid-tied inverter system, the output power setpoint of the grid-tied inverter sent by the energy management system and adjusting, by the grid-tied inverter system, the actual output power value of the grid-tied inverter based on the output power setpoint of the grid-tied inverter; and
receiving, by the energy storage inverter system, the output power setpoint of the energy storage inverter sent by the energy management system and adjusting, by the energy storage inverter system, the actual output power value of the energy storage inverter based on the output power setpoint of the energy storage inverter.

14. A photovoltaic inverter system, **characterized by**, comprising: an energy management system and a hybrid inverter parallel system, wherein
the hybrid inverter parallel system comprises at least one grid-tied inverter and at least one energy storage inverter, each grid-tied inverter in the at least one grid-tied inverter and each energy storage inverter in the at least one energy storage inverter are configured to be connected to a photovoltaic module, and the grid-tied inverter and the energy storage inverter are operably connected in parallel to an alternating current bus; and
the energy management system communicates with the hybrid inverter parallel system, and is configured to perform the steps of the control method of any one of claims 1 to 8.

15. The photovoltaic inverter system of claim 14, wherein the energy storage inverter and the grid-tied inverter are configured to perform the steps of the control method of any one of claims 9 to 13.
